# EUROPÄISCHE PATENTSCHRIFT

(11) **EP 0 337 364 B1**
(45) Veröffentlichungstag und Bekanntmachung des Hinweises auf die Patenterteilung: **28.09.1994**
(21) Anmeldenummer: 89106344.8
(22) Anmeldetag: 11.04.1989
(51) Int. Cl.: B60R 1/06

(54) **Abklappbarer Aussenspiegel für Fahrzeuge**
Breakaway exterior mirror for vehicles
Rétroviseur extérieur rabattable pour véhicules

(30) Priorität: 12.04.1988 DE 8804802 U
(43) Veröffentlichungstag der Anmeldung: 18.10.1989
(73) Patentinhaber: HOHE KG, D-97903 Collenberg (DE)
(72) Erfinder: Schwartz, Christoph, Dipl.-Ing., D-6982 Freudenberg (DE); Polzer, Herwig Winfried, D-8760 Miltenberg (DE)
(74) Vertreter: Zinngrebe, Horst, Dr.rer.nat.

(56) Entgegenhaltungen:
- DE-A- 3 032 392
- DE-A- 3 220 893
- DE-U- 8 711 959

## Beschreibung

Die Erfindung betrifft einen Außenspiegel für Fahrzeuge mit einem an der Karosserie des Fahrzeugs befestigbaren Spiegelfuß und einem am Spiegelfuß mit Federkraft in Gebrauchslage gehaltenen Spiegelgehäuse, wobei ein Rand des Spiegelgehäuses auf einer Schulter des Spiegelfusses ruht und das Spiegelgehäuse um seinen in Fahrtrichtung hinteren Randabschnitt gegen die Federkraft relativ zum Spiegelfuß nach hinten schwenkbar ist, und wobei am Spiegelfuß ein gebogenes, in Gebrauchslage vom Spiegelgehäuse umschlossenes und um eine zur Schwenkachse des Spiegelgehäuses parallele Achse schwenkbares Bauteil befestigt ist.

Bei diesem aus DE-A-32 20 893 bekannten Außenspiegel ist das relativ zur Fahrtrichtung nach rückwärts geschwenkte Spiegelgehäuse in einer Schwenkendlage relativ zum Spiegelfuß gehalten. Dazu ist am Spiegelfuß ein nach vorne federbelasteter Schwenkarm angelenkt, dessen ausgekehltes freies Ende in der Schwenkendlage den vorderen Spiegelgehäuserand unterfaßt. Beim Durchfahren durch enge Passagen kann das über die Fahrzeugkarosserie seitlich vorstehende Spiegelgehäuse vom Fahrer in die Schwenkendlage abgeklappt werden, so daß sich die für die Durchfahrt des Fahrzeugs erforderliche Durchlaßbreite der Engstelle entsprechend reduziert.

Wenn bei Weiterfahrt das Spiegelgehäuse wieder in die Gebrauchslage zurückgeklappt werden soll, muß der Fahrer den Schwenkarm aus der Arretierstellung nach rückwärts drücken. Dabei kann sich ein Sicherheitsrisiko für den Fahrer insofern ergeben, als seine Finger beim Zurückklappen des Spiegelgehäuses in die Gebrauchslage unter der Wirkung einer üblicherweise stark ausgelegten Zugfeder zwischen vorderem Spiegelgehäuserand und Spiegelfuß eingeklemmt werden können.

In dem Dokument DE-U-87 11 959 ist zur Minderung dieses Sicherheitsrisikos eine lösbare Rastvorrichtung zwischen Spiegelgehäuse und Spiegelfuß vorgesehen, welche einerseits das Spiegelgehäuse in der Schwenkendlage definiert hält und andererseits durch leichten, in die Gebrauchslage gerichteten Stoß auf den äußeren Spiegelgehäuserand gelöst werden kann, so daß der Fahrer nicht mehr genötigt ist, mit seinen Händen in die Öffnung zwischen abgeklapptem Spiegelgehäuse und Spiegelfuß eingreifen zu müssen.

Mit dieser Maßname bleibt jedoch die Öffnung zwischen vorderem Spiegelgehäuserand und Spiegelfuß bei nach hinten abgeklapptem Spiegelgehäuse frei zugänglich. Damit bleibt ein Restrisiko einer Verletzungsgefahr bestehen, wenn beispielsweise unbeabsichtigt und unbefugt oder bei der Durchführung von Wartungs- oder Reparaturarbeiten im Vertrauen auf den sicheren Halt des Spiegelgehäuses in der Schwenkendlage durch den Rastmechanismus in die Öffnung eingegriffen wird. Ferner besteht die Gefahr, daß nach dem Anklappen des Spiegelgehäuses an die Fahrzeugkarosserie Fremdpartikel oder Wasser von Waschanlagen in den Bereich zwischen Spiegelfuß und Spiegelgehäuse eingebracht werden.

Aus der DE-A-30 32 392 ist ein schwenkbarer Außenspiegel für Fahrzeuge bekannt, bei dem der vordere Übergang zwischen Spiegelgehäuse und Spiegelfuß von einer elastischen Verkleidung überbrückt ist, welche die beim Abschwenken des Spiegelgehäuses nach hinten entstehende Öffnung zwischen Spiegelgehäuse und Spiegelfuß abdeckt. Diese üblicherweise aus einem Balg aus gummielastischem Werktstoff bestehende Abdeckung ist jedoch relativ aufwendig, weil besondere Maßnahmen zu ihrer dauerhaften Festlegung am Spiegelfuß und Spiegelgehäuse erforderlich sind. Ferner unterliegt der gummiartige Werkstoff Alterungserscheinungen, so daß er unter den Witterungseinflüssen nach längerem Gebrauch brüchig und rissig wird. Schließlich ist der relativ weiche Werkstoff schwerer sauber zu halten als das Kunststoffgehäuse, welches üblicherweise aus einem relativ harten Werkstoff besteht.

Der Erfindung liegt daher die Aufgabe zugrunde, bei einem Außenspiegel zum Beispiel gemäß DE-U-87 11 959 eine Abdeckung für die Öffnung zwischen Spiegelgehäuse und Spiegelfuß zu schaffen, die zweckmäßig aus dem gleichen Werkstoff wie das Spiegelgehäuse hergestellt werden kann, mithin alterungsbeständig ist und eine manuelle Zugriffsmöglichkeit in die Öffnung weitgehend ausschließt.

Bei einem Außenspiegel für Fahrzeuge mit einem an der Karosserie des Fahrzeugs befestigbaren Spiegelfuß und einem am Spiegelfuß mit Federkraft in Gebrauchslage gehaltenen Spiegelgehäuse, wobei ein Rand des Spiegelgehäuses auf einer Schulter des Spiegelfusses ruht und das Spiegelgehäuse um seinen in Fahrtrichtung hinteren Randabschnitt gegen die Federkraft relativ zum Spiegelfuß nach hinten schwenkbar ist, ist zur Lösung der genannten Aufgabe erfindungsgemäß vorgesehen, daß am Spiegelfuß eine gebogene, in Gebrauchslage vom Spiegelgehäuse umschlossene Kappe befestigt ist, deren Krümmung auf den hinteren Randabschnitt zentriert ist und die praktisch vollständig die Öffnung verschließt, die bei nach hinten geschwenktem Spiegelgehäuse zwischen dessen Randabschnitt und dem Spiegelfuß entsteht. Damit bleibt die Kappe in Gebrauchsstellung des Spiegelgehäuses vor Witterungseinflüssen befreit und tritt auch ästhetisch nach außen nicht in Erscheinung. Ferner kann die Kappe aus einem einfachen Kunststoff-Spritzteil hergestellt werden. Schließlich ermöglicht sie die volle Abdeckung der Öffnung zwischen Spiegelgehäuse und Spiegelfuß beim Abschwenken des ersteren.

Wenn in üblicher Weise das Spiegelgehäuse relativ zum Spiegelfuß auch nach vorne abschwenkbar ist, empfiehlt es sich in Weiterbildung der Erfindung, die Kappe in der Nähe eines vorderen Schulterabschnittes am Spiegelfuß anzulenken und entweder mittels einer Feder gegen das Spiegelgehäuse anzudrücken oder an der Kappe einen Fuß vorzusehen, mit dem sie sich beim Rückwärtsschwenken auf dem Spiegelfuß abstützt. Diese Ausführungsformen ermöglichen eine Mitnahme der Kappe beispielsweise durch die das Spiegelgehäuse in Gebrauchslage haltende Zugfeder beim Abschwenken des Spiegelgehäuses nach vorne.

In einer besonders bevorzugten Ausgestaltung der Erfindung kann an der Kappe ein Sperrorgan ausgebildet sein, welches das Spiegelgehäuse in einer bezüglich der Fahrtrichtung hinteren Schwenkendlage lösbar ergreift. Dieses Sperrorgan kann dadurch in die Kappenform integriert sein, daß eine aus der Außenkontur der Kappe vorstehende Nase vorgesehen ist, welche den vorderen Randabschnitt in der Schwenkendlage unterfaßt. Aus der definierten Schwenkendlage kann das Spiegelgehäuse dann durch leichten Stoß auf die äußeren Partien des Spiegelgehäuses vom Fahrersitz aus befreit werden, woraufhin das Spiegelgehäuse selbsttätig von der Zugfeder in seine Gebrauchslage zurückgeschwenkt wird.

Für die Ausbildung des Sperrorgans kommen neben der erwähnten Nase mehrere alternative Ausführungsformen erfindungsgemäß in Betracht. So kann das Sperrorgan ein einen Absatz des Spiegelgehäuses unterfassender Riegel sein, welcher innerhalb der Kappe befestigt ist und aus einer Öffnung der Kappe wenig vorsteht, wobei zur Erleichterung der Abschwenkbewegung des Spiegelgehäuses nach hinten der Riegel zweckmäßig gegen Federdruck nach rückwärts ausweichen kann.

In einer anderen Ausführungsform besitzt das Sperrorgan die Form einer Wippe, welche von einer Feder in jeweils einer von zwei Kipplagen gehalten ist. In der ersten Kipplage fällt bei Erreichen der Schwenkendlage eine an der Wippe oder dem Spiegelgehäuse ausgebildete Raste in eine Falle und hält auf diese Weise das abgeschwenkte Spiegelgehäuse in der Schwenkendlage. Zum Lösen aus dieser Schwenkendlage wird das Spiegelgehäuse noch ein kurzes Stück weiter zur Fahrzeugkarosserie angeschwenkt, wodurch die Wippe in ihre zweite Kipplage überführt wird, in welcher die Raste aus der Falle freikommt, so daß das Spiegelgehäuse von der Zugfeder in seine Gebrauchslage zurückgeführt werden kann. Bei diesem Rückschwenken stellt das Spiegelgehäuse die Wippe in ihrer erste Kipplage um, so daß diese zur erneuten Arretierung des Spiegelgehäuses in seiner hinteren Schwenkendlage vorbereitet ist.

Die bevorzugten Ausgestaltungen der Erfindung sind im einzelnen in den Unteransprüchen angegeben.

Nachstehend wird die Erfindung anhand der in der beigefügten Zeichnung dargestellten Ausführungsbeispiele im einzelnen beschrieben. Es zeigen:
- Fig. 1:: einen horizontalen Querschnitt durch Spiegelgehäuse und an einer Fahrzeugkarosserie montierten Spiegelfuß (Stand der Technik);
- Fig. 2:: einen Querschnitt durch den spiegelfußnahen Teil des Spiegelgehäuses mit Kappe in Gebrauchslage;
- Fig. 3:: einen Querschnitt durch den spiegelfußnahen Teil des Spiegelgehäuses mit Kappe in hinterer Schwenkendlage;
- Fig. 4:: einen Querschnitt durch den spiegelfußnahen Teil des Spiegelgehäuses in vorderer Schwenklage;
- Fig. 5:: eine der Fig. 3 ähnliche Darstellung einer zweiten Ausführungsform eines Sperrorgans;
- Fig. 6:: eine Draufsicht auf den Spiegelfusses mit Kappe und Sperrorgan gemäß Fig. 5 nach Abnahme des Spiegelgehäuses;
- Fig. 7:: eine der Fig. 3 ähnliche Darstellung einer dritten Ausführungsform;
- Fig. 8:: eine vergrößerte Ausschnittsdarstellung aus Fig. 7; und
- Fig. 9:: eine vergrößerte Ausschnittsdarstellung aus Fig. 7, jedoch mit einer anderen Ausführungsform des Sperrorgans.

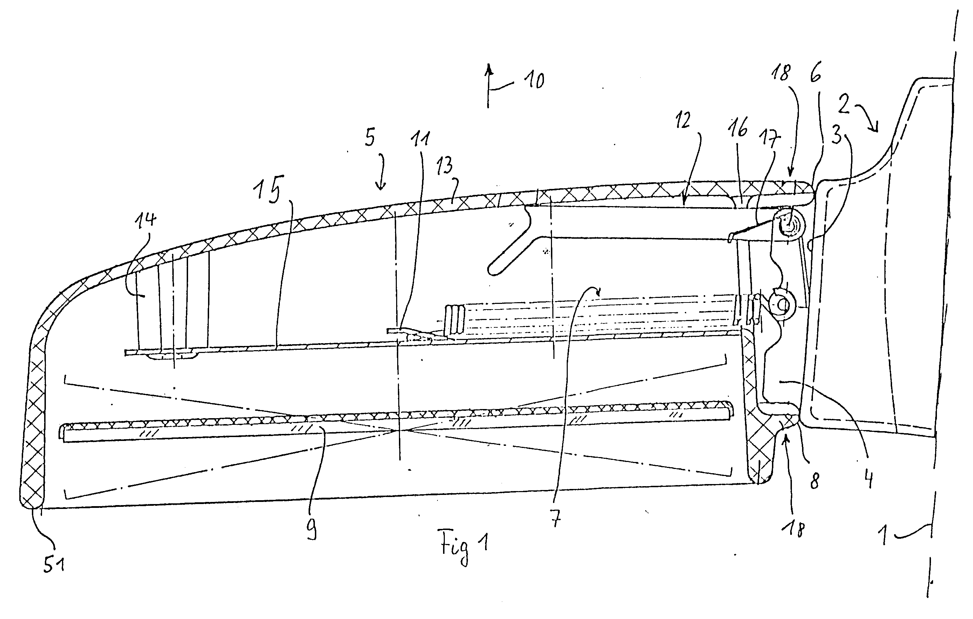

Zur Erläuterung des technischen Hintergrundes der Erfindung zeigt Fig. 1 zunächst einen Außenspiegel bekannter Bauart (DE-A-32 20 893). An einer schematisch gestrichelt dargestellten Fahrzeugkarosserie 1 ist ein Spiegelfuß 2 in nicht dargestellter Weise befestigt. An der von der Fahrzeugkarosserie 1 abgewandten Seite besitzt der Spiegelfuß 2 eine Montageplatte 4, welche, zur Fahrzeugkarosserie 1 hin abgesetzt, von einer um die Montageplatte 4 umlaufenden nach außen vorstehenden. Schulter 3 umgeben ist. Ein Spiegelgehäuse 5 besitzt einen spiegelfußnahen am Ende ballig geformten Rand 18, von dem in Fig. 1 der vordere Randabschnitt 6 und der hintere Randabschnitt 8 zu erkennen sind. Die Bezeichnungen "vorne" und "hinten" beziehen sich auf die mit dem Pfeil 10 angegebene Fahrtrichtung des Fahrzeugs. Die Randabschnitte 6, 8 umgreifen die Montageplatte 4 und stehen in der in Fig. 1 dargestellten Gebrauchslage des Spiegelgehäuses 5 auf entsprechenden Partien der Schulter 3 auf.

An der Montageplatte 4 ist ein Ende einer kräftigen Zugfeder 7 befestigt, deren in dem Spiegelgehäuse 5 befindliches Ende in eine Öse 11 einer Tragplatte 15 eingehängt ist. Die Tragplatte 15 ist an der vorderen Wand 13 des Spiegelgehäuses 5 über Stützen befestigt, von denen eine spiegelfußferne Stütze 14 in Fig. 1 angegeben ist. In nicht dargestellter Weise ist ein Spiegelglas 9 auf der Tragplatte 15 in üblicher Weise mittels vom Fahrzeuginneren aus über nicht dargestellte, sich durch den Spiegelfuß 2 und eine Öffnung 16 im Spiegelgehäuse 5 erstreckende Betätigungsorgane verstellbar gehalten. In der Nähe des vorderen Randabschnittes 6 ist an der Montageplatte 4 ein sich in das Innere des Spiegelgehäuses 5 erstreckender Arm angelenkt und von einer Feder 17 gegen die Innenseite der Wand 13 gehalten.

Zu weiteren Einzelheiten und der Wirkungsweise des Abschwenkens des Spiegelgehäuses 5 relativ zum Spiegelfuß 2 nach vorne oder hinten wird auf die DE-A-32 20 893 Bezug genommen.

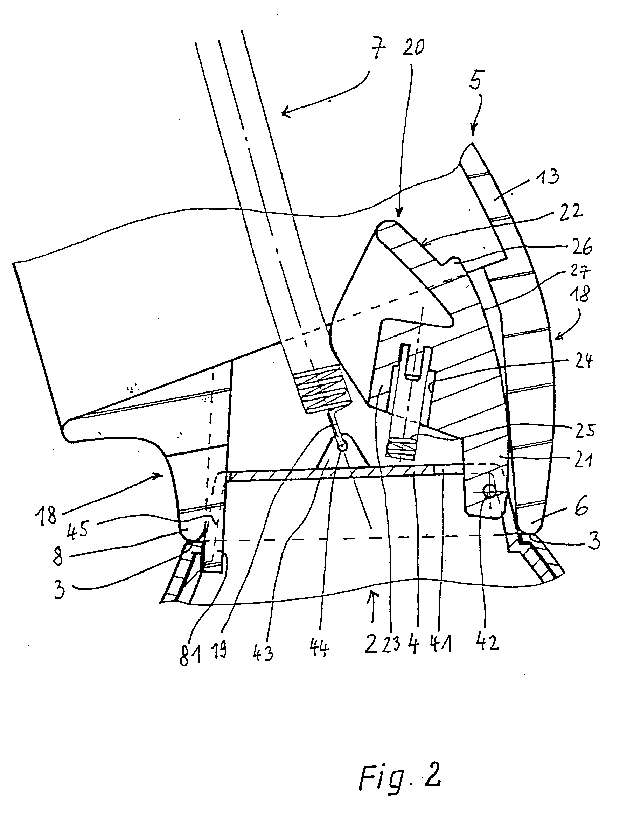

Gemäß der in Fig. 2 bis 4 dargestellten ersten Ausführungsform der Erfindung ist eine im Ganzen mit 20 bezeichnete Kappe innerhalb des Randes 13 in einem Bereich der Montageplatte 4 des Spiegelfusses 2 angelenkt, der dem vorderen Randabschnitt 6 benachbart ist. Dazu weist die Montageplatte 4 ein Ausschnitt 41 auf, in welchen ein unteres Ende 21 der Kappe 20 hineinragt und dort auf einem Zapfen 42 um eine zur Ebene der Fig. 2 senkrechte, bei an das Fahrzeug anmontiertem Außenspiegel also in wesentlichen vertikale der Achse schwenkbar gehalten ist. Die Kappe 20, die ein einteiliges Bauteil ist und aus dem gleichen Kunststoff besteht wie das Spiegelgehäuse 5, hat eine gebogene oder gewölbte Form, deren Krümmung auf den hinteren Randabschnitt 8 zentriert ist. Die Schalenform der Kappe 20 richtet sich im einzelnen nach der äußeren Form des Randes 18 derart, daß die Außenkontur 22 der Kappe 20 durch die Gestalt der Bahn definiert ist, die der vordere Randabschnitt 6 beim Abschwenken des Spiegelgehäuses 5 nach hinten durchläuft.

An die Kappe 20 ist eine innere Verdickung 23 angeformt, welche eine Tasche 24 zur Aufnahme und zum Halten einer Druckfeder 25 aufweist. Die Druckfeder 25 steht mit ihrem freien Ende aus der Tasche 24 vor und kann sich auf der Oberseite der Montageplatte 4 des Spiegelfusses 2 abstützen.

Aus der Außenkontur 22 der Kappe 20 steht in der Mähe ihres spiegelfussfernen Endes eine Nase 26 nach außen vor, deren Funktion noch erläutert wird.

Ferner ist in den Figuren 2 bis 4 zu erkennen, daß aus der Montageplatte 4 etwa mittig ein Anker 43 mit einem Auge 44 zum Spiegelgehäuse 5 hin vorsteht. In das Auge 44 ist das spiegelfußnahe Ende 19 der Zugfeder 7 eingehängt.

An dem hinteren Randabschnitt 8 ist ein stiftförmiger Fortsatz 81 ausgebildet, welcher in einen hinteren Ausschnitt 45 in der hinteren Seitenflanke der Montageplatte 4 eintaucht.

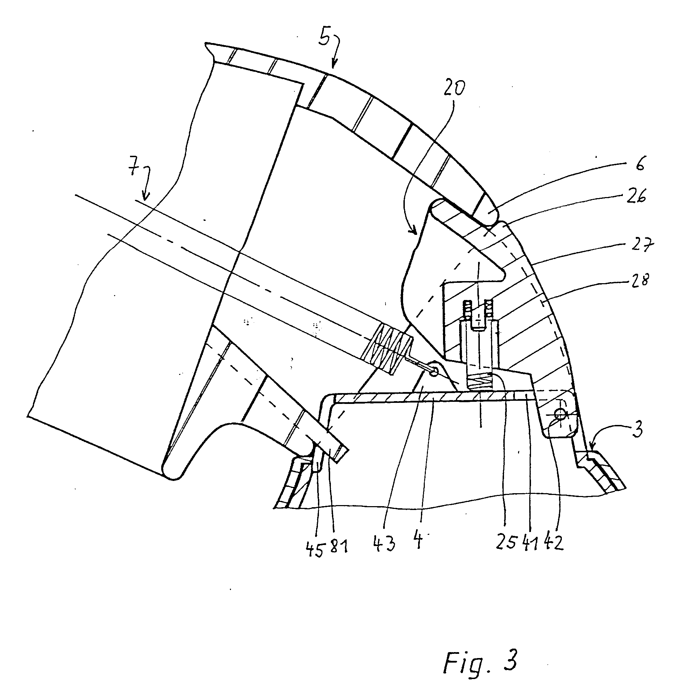

Bei der in Fig. 2 ausschnittweise dargestellten Gebrauchslage des Spiegelgehäuses 5 ist die die Kappe 20 und die Druckfeder 25 umfassende Baugruppe ganz vom Rand 18 des Spiegelgehäuses 5 und somit von außen nicht sichtbar. Beim Abschwenken des Spiegelgehäuses 5 nach hinten um eine Achse, die im wesentlichen durch die Auflage des hinteren Randabschnittes 8 auf dem hinteren Teil der Schulter 3 bestimmt ist, gleitet der vordere Randabschnitt 6 auf einem ersten Teil 27 der Außenkontur 22 entlang, welcher gegenüber dem umgebenden Teil 28 der Außenkontur rippenartig mit nach oben zunehmender Stärke vorsteht und in der Nase 26 endet. Während des Entlanggleitens des vorderen Randabschnittes 6 wird die Kappe 20 um den Zapfen 42 in Richtung auf die Montageplatte 4 gegen die Wirkung der sich auf dieser dann abstützenden Druckfeder 25 gedrückt. Hat im Zuge der fortschreitenden Schwenkbewegung nach hinten der vordere Randabschnitt 6 die Nase 26 passiert, springt die Kappe 20 soweit nach vorne, daß der obere Teil 29 ihrer Außenkontur 22 jetzt von innen gegen den Rand 18 anliegt. Gleichzeitig sichert das Eindringen des Fortsatzes 81 durch den Ausschnitt 45 in den Spiegelfuß 2 das Spiegelgehäuse 5 an einer Verschiebung relativ zum Spiegelfuß 2 nach unten oder oben. Das Spiegelgehäuse 5 kann in Richtung auf seine Gebrauchslage unter der Wirkung der Zugfeder 7 jetzt nur noch bis zu seiner in Fig. 3 dargestellten hinteren Schwenkendlage zurückkehren, welche durch Unterfassen des vorderen Randabschnittes 6 durch die Nase 26 bestimmt ist. Aus dieser stabilen Schwenkendlage kann das Spiegelgehäuse durch kurzen Schlag oder Druck von Hand auf seinen äußeren Teil 51 befreit werden, wodurch der vordere Randabschnitt 6 über die Nase 26 nach außen hinausgehoben wird, was durch eine entsprechende Größe des hinteren Ausschnitts 45 ermöglicht wird. Danach kann das Spiegelgehäuse 5 unter der Wirkung der Zugfeder 7 selbsttätig in die in Fig. 2 dargestellte Gebrauchslage zurückkehren.

Man erkennt jedenfalls, daß die Form der Kappe die Öffnung, die zwischen vorderem Randabschnitt 6 und Montageplatte 4 des Spiegelfusses 2 bei der nach hinten erfolgender Schwenkbewegung des Spiegelgehäuses entsteht, von der Kappe 20 weitgehend verschlossen ist. Die seitliche Ausdehnung der Kappe 20 unterliegt dabei keinen Beschränkungen, so daß diese so groß gewählt werden kann, daß die genannte Öffnung bis zur hinteren Schwenkendlage praktisch vollständig von außen verschlossen bleibt.

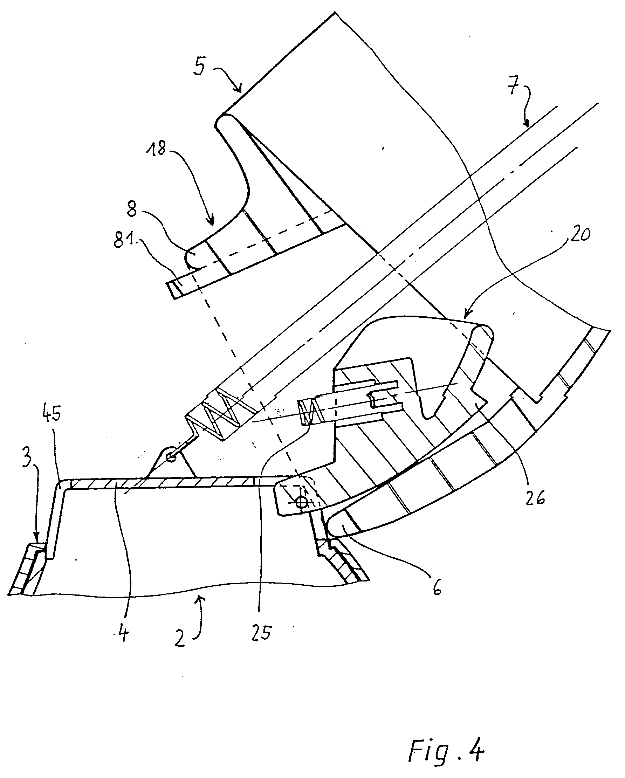

Bei dem Abschwenken des Spiegelgehäuses hebt gemäß Fig. 4 der hintere Randabschnitt 8 mit Fortsatz 81 vom hinteren Teil der Schulter 3 ab, während der vordere Randabschnitt 6 auf dem vorderen Teil der Schulter 3 abrollt. Die Kappe 20 wird bei dieser nach vorne gerichteten Schwenkbewegung von der Zugfeder 7 mit nach vorne geschwenkt, stört jedoch sonst die zwangsläufigen Bewegungen der Zugfeder und der sonstigen Verstellorgane für den Spiegel 9 nicht.

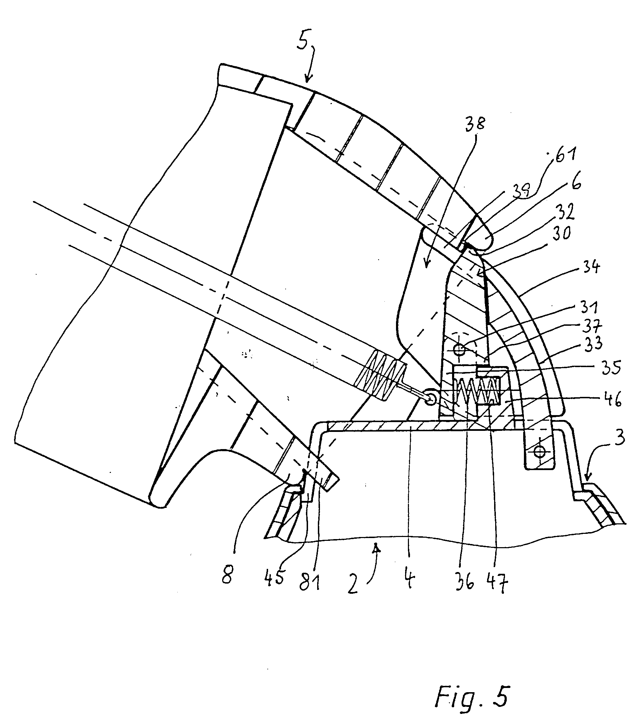

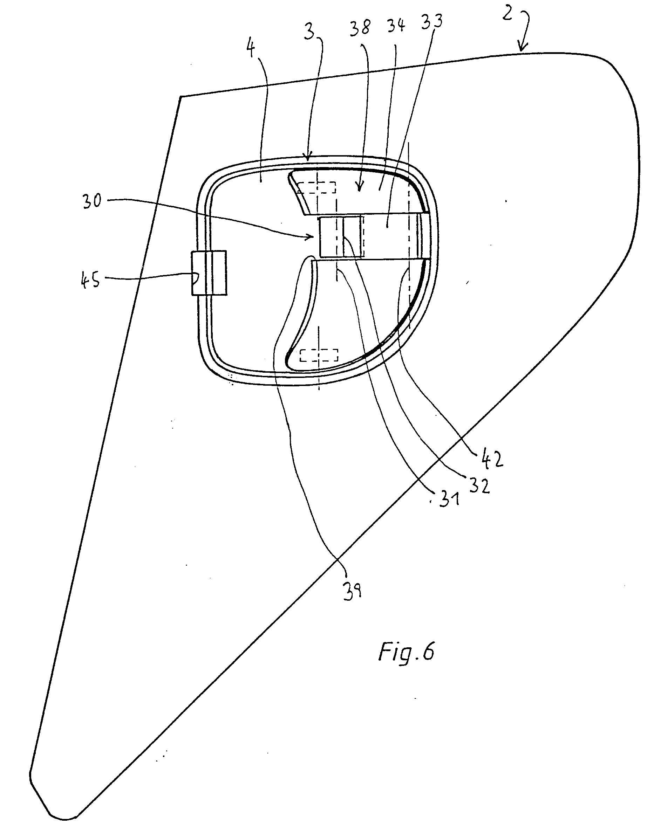

Die in den Figuren 5 und 6 dargestellte zweite Ausführungsform der Erfindung unterscheidet sich von der ersten, vorstehend beschriebenen Ausführungsform dadurch, daß statt der aus der Außenkontur 22 der Kappe 20 vorspringenden Nase ein separater Riegel 30 vorgesehen ist, welcher auf einer zum Zapfen 42 im wesentlichen parallelen Welle 31 schwenkbar gelagert ist. Der Riegel 30 läuft oben zu einem schmalen Grat 32 zu, welcher in eine in die Außenkontur 34 eingesenkte Rinne 33 vorsteht. Von dem Riegel 30 reicht an dem von dem Grat 32 abgewandten Ende eine Schürze 35 in Richtung auf die Montageplatte 4 herab. In einem aus der Montageplatte 4 vorstehenden Bock 46 ist eine Einsenkung 46 ausgeformt, deren Öffnung auf die Schürze 35 zuweist. In der Einsenkung 47 ist eine Druckfeder 36 beherbergt, welche sich am Boden der Einsenkung 47 abstützt und gegen die Schürze 35 anliegt. Die Höhe des Bockes 46 über der Montageplatte 4 ist so gewählt, daß ein Absatz 37, der am Riegel 30 zwischen der Welle 31 und der Kappe 38 ausgebildet ist, in der in Fig. 5 dargestellten Arretierstellung des Riegels 30 auf der Oberseite des Bocks 46 als Anschlag aufsitzt.

Die Kappe 38 ist im oberen Bereicht der Rinne 33 bei 39 geschlitzt, gleicht im übrigen der Kappe 20 aus dem ersten Ausführungsbeispiel.

Das Spiegelgehäuse 5 besitzt innerhalb seines vorderen Randabschnitts 6 eine nach innen vorspringende Schulter 61, die soweit vorsteht, daß sie ganz in die Rinne 31 eintaucht und in der hinteren Schwenkendlage von dem Riegel 30 mit dessen Grat 32 hintergriffen werden kann.

Wird das Spiegelgehäuse 5 nach der zweiten Ausführungsform nach rückwärts abgeschwenkt, lenkt die Innenseite der Nase 61, die selbstverständlich nicht breiter ist als die Breite der Rinne 33, zunächst den Riegel 30 nach hinten gegen die Wirkung der Feder 36 zur Seite, bis der Riegel 30 in die in Fig. 5 dargestellten Arretierstellung hinter die Schulter 61 vorspringen kann. Das abgeschwenkte Spiegelgehäuse 5 kann dann in seine Gebrauchslage nur bis in die in Fig. 5 dargestellte hintere Schwenkendlage zurückkehren, bei der die Schulter 61 gegen den Grat 32 anliegt. Zum Lösen wird durch manuellen Druck auf die Partie 51 des Spiegelgehäuses die Nase 61 über den Grat 32 hinweggehoben, so daß das Spiegelgehäuse wieder in seine Gebrauchslage zurückkehren kann.

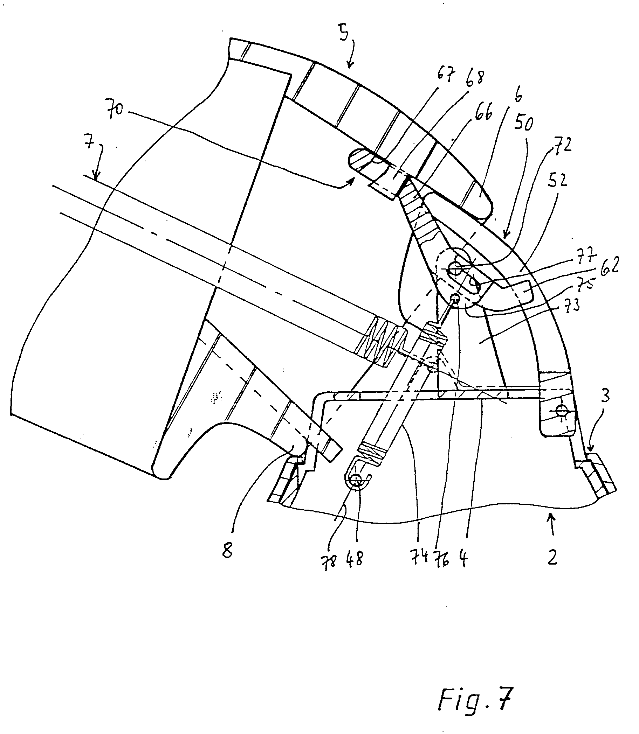

In der dritten Ausführungsform gemäß Fig. 7 ist die Kappe 50 im wesentlichen gleich gestaltet wie die Kappe 20, besitzt jedoch im Bereich der Rinne 33 aus der zweiten Ausführungsform einen Schlitz 52. Das Sperrorgan 70 hat in der dritten Ausführungsform die Gestalt einer Wippe, welche auf einer Welle 72 kippbar gelagert ist. Die Welle 72 ist Böcken 73 gehalten, die aus der Montageplatte 4 hinter der Kappe 50 in Richtung auf das Spiegelgehäuse 5 vorstehen. Eine Feder 74 ist an ihrem spiegelfußnahen Ende an einem am Spiegelfuß befestigten Zapfen 48 gehalten und mit ihrem wippennahen Ende in eine Bohrung 76 im mittleren Teil 75 der Wippe 70 eingehängt. Im mittleren Teil 75 ist die Wippe 70 mit einem Querschlitz 77 versehen, in welchem die Welle 72 eingefangen ist. Der Quereschlitz erstreckt sich quer zur Wirkungslinie 78 der Feder 74 in noch zu beschreibender Weise.

Die Wippe 70 besitzt einen ersten Arm 66, der in der Nähe seines freien Endes einen Durchbruch 67 aufweist. Der Durchbruch 67 dient als Falle für eine Rastnase 68, welche aus der Innenseite des vorderen Randabschnittes 6 des Spiegelgehäuses 5 vorsteht.

Die Wippe 70 besitzt einen zweiten Arm 62, der bezüglich des mittleren Teils 75 dem ersten Arm 66 gegenüber liegt und mit seinem freien Ende in den Schlitz 52 eintaucht.

Fig. 7 zeigt das Spiegelgehäuse 5 in der hinteren Schwenkendlage, bei der die Rastnase 68 in der Falle 67 eingefangen ist und sich über den ersten Arm 66 und das dem Arm 66 benachbarte Ende des Querschlitzes 77 auf der Welle 72 abstützt. Somit wird das Spiegelgehäuse 5 in der hinteren Schwenkendlage sicher gehalten. Die Wirkungslinie 78 der Feder 74 verläuft gemäß Fig. 7 rechts von der Welle 72, so daß die Federe 74 auf die Wippe 70 ein Drehmoment im Urzeigersinn ausübt, mithin den ersten Arm 66 gegen die Innenseite des vorderen Randabschnittes 6 hält. Zum Lösen des Spiegelgehäuses 5 aus der hinteren Schwenkendlage wird das Spiegelgehäuse 5 noch weiter nach hinten abgeschwenkt. Bei dieser weitergehenden Schwenkbewegung nimmt die Rastnase 68 die Wippe 70 dergestalt mit, daß die Wippe 70 über die Welle 72 gezogen wird, bis die Welle 72 am gegenüberliegenden Ende des Querschlitzes 77 anliegt. Dabei passiert die Wirklinie 78 die Welle 72, so daß nach dem Passieren die Feder 74 ein Drehmoment auf die Wippe 70 in Gegenrichtung des Uhrzeigers ausübt. Dies hat zur Folge, daß die Wippe 70 aus der in Fig. 7 dargestellten ersten, arretierenden Kipplage in eine zweite, nicht dargestellte Kipplage unter der Wirkung der Feder 74 verschwenkt. Dadurch wird der erste Arm 66 von der Rastnase 68 abgezogen wird, so daß das Spiegelgehäuse 5 jetzt ungehindert unter der Wirkung der Zugfeder 7 in seine Gebrauchslage zurückkehren kann. Da in der zweiten Kipplage, die durch Freigabe der Rastnase 68 aus der Falle 67 bestimmt ist, der zweite Arm 62 aus dem Schlitz 52 in den Rückkehrweg des vorderen Randabschnittes ragt, stellt der vordere Randabschnitt 6 auf seinem Rückkehrweg von dem Bereich der hinteren Schwenkendlage in die Gebrauchslage durch Mitnahme des zweiten Armes 62 die Wippe 70 wieder in die erste Kipplage um, bei der der erste Arm 66 von innen gegen das Spiegelgehäuse 5 anliegt. Das Spiegelgehäuse 5 kann dann erneut nach hinten abschwenken, wobei die Rastnase 68 in dem Schlitz 52 entlangfährt und die Wippe 70 gegen die Wirkung der Feder 74 solange auslenkt, bis die Rastnase 68 in die Falle 67 eingefallen ist.

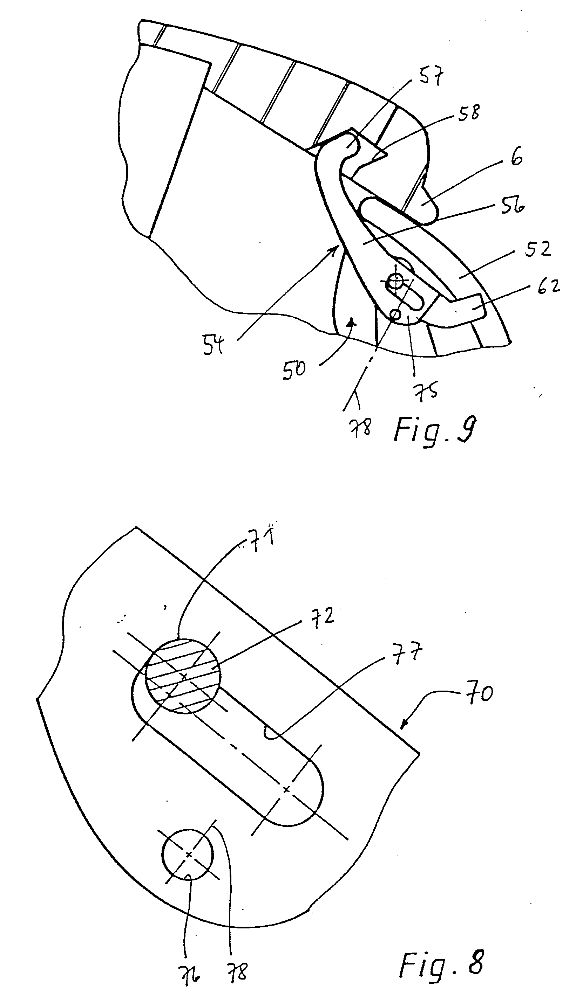

Wie Fig. 8 zeigt ist der Querschlitz 67 an demjenigen Ende, an welchem die Feder 74 ein in Richtung des Uhrzeigers gerichtetes Drehmoment auf die Wippe 70 ausübt, sackartig bei 71 erweitert. Diese Maßname bewirkt, daß zur Mitnahme der Wippe 70 durch das Spiegelgehäuse 5 aus der in Fig. 7 dargestellten ersten Kipplage heraus eine gewisse Kraft erforderlich ist, die durch das weitere Heranschwenken des Spiegelgehäuses 5 an das Fahrzeug aus der hinteren Schwenkendlage heraus leicht aufgebracht werden kann, jedoch verhindert, daß die Wippe 70 bereits beim Anlaufen der Rastnase 68 gegen den ersten Arm 66 während des Zurückschwenkens des Spiegelgehäuses 5 mitgenommen wird.

Fig. 9 zeigt eine Abwandlung der Wippe 70 am ersten Arm 66. Danach ist das freie Ende des ersten Arms der Wippe 54 nach außen bei 57 abgekröpft, welches ein Art Rastnase bildet. Entsprechend ist von der Innenseite in den vorderen Randabschnitt 6 eine taschenförmige Falle 58 eingeschnitten, in welche der erste Arm 56 der Wippe 54 eintauchen kann. Die Wirkungsweise der Wippe 54 gleicht im übrigen derjenigen der Wippe 70.

Es liegt im Rahmen der Erfindung, die Röcke 46, 73 an die zugehörige Kappe 38, 50 anzuformen und die Feder 74 an einem Zapfen 48 zu verankern, der ebenfalls in der Kappe 50 gelagert ist. Damit ist eine Baugruppe bestehend aus Kappe und Sperrorgan geschaffen, welche separat vom Außenspiegel montiert und dann als Ganzes in den Außenspiegel eingesetzt werden kann.

## Patentansprüche

1. Außenspiegel für Fahrzeuge mit einem an der Karosserie (1) des Fahrzeugs befestigbaren Spiegelfuß (2) und einem am Spiegelfuß mit Federkraft in Gebrauchslage gehaltenen Spiegelgehäuse (5), wobei ein Rand (18) des Spiegelgehäuses auf einer Schulter (3) des Spiegelfußes ruht und das Spiegelgehäuse um seinen in Fahrtrichtung (10) hinteren Randabschnitt (8) gegen die Federkraft relativ zum Spiegelfuß nach hinten schwenkbar ist, und wobei am Spiegelfuß ein gebogenes, in Gebrauchslage vom Spiegelgehäuses umschlossenes und um eine zur Schwenkachse des Spiegelgehäuses parallele Achse schwenkbares Bauteil (12) befestigt ist, gegen dessen Außenkontur das Spiegelgehäuse an seinem vorderen Randabschnitt beim Schwenken anliegt, dadurch gekennzeichnet, daß das Bauteil die Form einer Kappe (20, 38, 50) aufweist, deren Krümmung auf den hinteren Randabschnitt (8) zentriert ist und die praktisch vollständig die Öffnung verschließt, die bei nach hinten geschwenktem Spiegelgehäuse zwischen dessen Randabschnitt und dem Spiegelfuß entsteht.

2. Außenspiegel nach Anspruch 1, dadurch gekennzeichnet, daß die Kappe in der Nähe eines vorderen Schulterabschnittes (3) am Spiegelfuß (2) angelenkt und mittels einer Feder (25) gegen das Spiegelgehäuse gedrückt ist.

3. Außenspiegel nach Anspruch 1, dadurch gekennzeichnet, daß die Kappe in der Nähe eines vorderen Schulterabschnittes (3) am Spiegelfuß (2) angelenkt ist und einen Fuß aufweist, mit dem sie sich beim Schwenken auf dem Spiegelfuß abstützt.

4. Außenspiegel nach einen der vorstehenden Ansprüche, dadurch gekennzeichnet, daß an der Kappe ein Sperrorgan (26, 30, 54, 70) ausgebildet ist, welches das Spiegelgehäuse in einer bezüglich der Fahrtrichtung hinteren Schwenkendlage lösbar ergreift.

5. Außenspiegel nach Anspruch 4, dadurch gekennzeichnet, daß das Sperrorgan eine aus der Außenkontur (22) der Kappe vorstehende Nase (26) ist, welche den vorderen Randabschnitt (6) in der Schwenkendlage unterfaßt.

6. Außenspiegel nach Anspruch 4, dadurch gekennzeichnet, daß das Sperrorgan ein einen Absatz (61) des Spiegelgehäuses unterfassender Riegel (30) ist, welcher innerhalb der Kappe (38) befestigt ist und aus einer Öffnung (39) der Kappe wenig vorsteht.

7. Außenspiegel nach Anspruch 6, dadurch gekennzeichnet, daß der Riegel gegen den Druck einer Feder (36) nach hinten abschwenkbar ist und in seiner Arretierstellung mit einem Absatz (37) auf einem festen Anschlag (46) aufsitzt.

8. Außenspiegel nach Anspruch 4, dadurch gekennzeichnet, daß das Sperrorgan eine zweiarmige Wippe (54, 70) ist, welche auf einem Zapfen (72) verschiebbar gelagert ist, wobei in einer ersten Kipplage der Wippe (54, 70) eine lösbare Rastverbindung zwischen einem ersten Arm (66, 56) der Wippe und dem Spiegelgehäuse (5) hergestellt ist und in einer zweiten Kipplage der Wippe die Rastverbindung (67, 68; 57, 58) gelöst ist.

9. Außenspiegel nach Anspruch 8, dadurch gekennzeichnet, daß ein zweiter Arm 62 der Wippe (54, 70) in der zweiten Kippstellung in die Bahn des vorderen Randabschnittes (6) ragt.

10. Außenspiegel nach Anspruch 8 oder 9, dadurch gekennzeichnet, daß an der Wippe (54, 70) eine Zugfeder (74) angreift, welche auf die Wippe in der ersten Kipplage ein Drehmoment ausübt, das entgegengesetzt zu demjenigen Drehmoment wirkt, welches die Feder (74) in der zweiten Kipplage auf die Wippe (54, 70) ausübt.

11. Außenspiegel nach einem der Ansprüche 8 bis 10, dadurch gekennzeichnet, daß die Rastverbindung aus einer Rastnase (57, 68) und einer Falle (58, 67) besteht, in welche die Rastnase in der hinteren Schwenkendlage einfällt, wobei die Falle am ersten Arm (66) der Wippe (70) oder am Spiegelgehäuse (58) ausgebildet ist.

## Claims

1. An exterior mirror for vehicles, comprising a mirror base (2) designed to be fixed to the body (1) of the vehicle and a mirror housing (5) held in the use position on the mirror base by spring tension, wherein a periphery (18) of the mirror housing rests on a shoulder (3) of the mirror base and the mirror housing is adapted to swivel towards the rear around its rear peripheral portion (8), in the direction of travel (10), relative to the mirror base against the spring tension, and wherein a curved component (12) [sic, recte 20?], enclosed in the use position by the mirror housing and adapted to swivel about an axis parallel to the swivel axis of the mirror housing, is secured to the mirror base, the front peripheral portion of the mirror housing butting against the exterior contour of the said component when it swivels, characterized in that the component is in the form of a cap (20, 38, 50), of which the curvature is centred on the rear peripheral portion (8) and which virtually completely closes the opening produced between the peripheral portion of the mirror housing and the mirror base when the mirror housing is swivelled towards the rear.

2. An exterior mirror according to claim 1, characterized in that the cap is pivotally connected to the mirror base (2) in the vicinity of a front shoulder portion (3) and is pressed against the mirror housing by means of a spring (25).

3. An exterior mirror according to claim 1, characterized in that the cap is pivotally connected to the mirror base (2) in the vicinity of a front shoulder portion (3) and has a base with which it is supported on the mirror base when it swivels.

4. An exterior mirror according to one of the preceding claims, characterized in that a locking element (26, 30, 54, 70) is formed on the cap which releasably grips the mirror housing in a rear swivelling end position with respect to the direction of travel.

5. An exterior mirror according to claim 4, characterized in that the locking element is a projection (26) projecting from the exterior contour (22) of the cap, which projection engages under the front peripheral portion (6) in the swivelling end position.

6. An exterior mirror according to claim 4, characterized in that the locking element is a bolt (30) engaging under a step (61) of the mirror housing, which bolt is secured inside the cap (38) and only slightly projects from an opening (39) of the cap.

7. An exterior mirror according to claim 6, characterized in that the bolt can be swivelled towards the rear against the pressure of a spring (36) and in its arresting position a step (37) thereof is situated on top of a fixed stop (46).

8. An exterior mirror according to claim 4, characterized in that the locking element is a two-armed rocker (54, 70) which is movably mounted on a pin (72), wherein in a first tilting position of the rocker (54, 70) a separable detent connection is produced between a first arm (66, 56) of the rocker and the mirror housing (5) and in a second tilting position of the rocker the detent connection (67, 68; 57, 58) is released.

9. An exterior mirror according to claim 8, characterized in that a second arm [62] of the rocker (54, 70) in the second tilting position projects into the path of the front peripheral portion (6).

10. An exterior mirror according to claim 8 or 9, characterized in that the rocker (54, 70) is acted upon by a tension spring (74) which exerts a torque on the rocker in the first tilting position which works against the torque which the spring (74) exerts on the rocker (54, 70) in the second tilting position.

11. An exterior mirror according to one of claims 8 to 10, characterized in that the detent connection consists of a detent projection (57, 68) and a trap (58, 67) into which the detent projection drops in the rear swivelling end position, the trap being formed in the first arm (66) of the rocker (70) or in the mirror housing (58).

## Revendications

1. Rétroviseur extérieur pour véhicules avec un support de rétroviseur (2) pouvant être fixé à la carrosserie (1) du véhicule et un corps de rétroviseur (5) maintenu en position d'utilisation sur le support de rétroviseur par effet de ressort, un bord (18) du corps de rétroviseur reposant sur un épaulement (3) du support de rétroviseur et le corps de rétroviseur étant pivotant vers l'arrière par rapport au support de rétroviseur contre l'effet de ressort autour de sa section de bord arrière (8) suivant la direction de déplacement (10) et un élément coudé (12), entouré par le corps de rétroviseur en position d'utilisation et pivotant autour d'un axe parallèle à l'axe de pivotement du corps de rétroviseur étant fixé sur le support de rétroviseur, contre le contour extérieur duquel le corps de rétroviseur repose sur sa section de bord avant lors du pivotement, caractérisé en ce que l'élément a la forme d'une calotte (20, 38, 50) dont la courbure est centrée sur la section de bord arrière (8) et qui ferme pratiquement complètement l'ouverture qui apparaît entre sa section de bord et le support de rétroviseur lorsque le corps de rétroviseur est pivoté vers l'arrière.

2. Rétroviseur extérieur selon la revendication 1, caractérisé en ce que la calotte est articulée au support de rétroviseur (2) à proximité d'une section d'épaulement avant (3) et est pressée contre le corps de rétroviseur au moyen d'un ressort (25).

3. Rétroviseur extérieur selon la revendication 1, caractérisé en ce que la calotte est articulée au support de rétroviseur (2) à proximité d'une section d'épaulement avant (3) et présente un pied avec lequel elle s'appuie sur le support de rétroviseur lors du pivotement.

4. Rétroviseur extérieur selon l'une des revendications précédentes, caractérisé en ce qu'un organe de blocage (26, 30, 54, 70) est formé sur la calotte, lequel touche de façon amovible le corps de rétroviseur dans une position extrême de pivotement arrière par rapport à la direction de déplacement.

5. Rétroviseur extérieur selon la revendication 4, caractérisé en ce que l'organe de blocage est un nez (26) saillant du contour extérieur (22) de la calotte qui touche par en-dessous la section de bord avant (6) dans la position extrême de pivotement.

6. Rétroviseur extérieur selon la revendication 4, caractérisé en ce que l'organe de blocage est un verrou (30) touchant par en-dessous un talon (61) du corps de rétroviseur qui est fixé à l'intérieur de la calotte (38) et dépasse légèrement d'une ouverture (39) de la calotte.

7. Rétroviseur extérieur selon la revendication 6, caractérisé en ce que le verrou est pivotant vers l'arrière contre la pression d'un ressort (36), et à sa position d'arrêt repose par un talon (37) sur une butée fixe (46) .

8. Rétroviseur extérieur selon la revendication 4, caractérisé en ce que l'organe de blocage est une bascule à deux bras (54, 70) qui est montée coulissante sur un tourillon (72), un assemblage amovible par crantage étant établi à une première position de basculement de la bascule entre un premier bras (66, 56) de la bascule et le corps de rétroviseur (5) et l'assemblage par crantage (67, 68 ; 57, 58) étant dégagé à une deuxième position de basculement de la bascule.

9. Rétroviseur extérieur selon la revendication 8, caractérisé en ce qu'un deuxième bras (62) de la bascule (54, 70) est situé dans la trajectoire de la section de bord avant (6) à la deuxième position de basculement .

10. Rétroviseur extérieur selon la revendication 8 ou 9, caractérisé en ce qu'un ressort de traction (74) est appliqué à la bascule (54, 70), lequel exerce sur la bascule à la première position de basculement un moment de rotation qui agit de façon opposée au moment de rotation qu'exerce le ressort (74) sur la bascule (54, 70) à la deuxième position de basculement.

11. Rétroviseur extérieur selon l'une des revendications 8 à 10, caractérisé en ce que l'assemblage par crantage est constitué d'un nez d'arrêt (57, 68) et d'un évidement (58, 67) dans lequel le nez d'arrêt vient se loger dans la position extrême de pivotement arrière, l'évidement étant ménagé dans le premier bras (66) de la bascule (70) ou dans le corps de rétroviseur (58).
